# EUROPEAN PATENT SPECIFICATION

(11) **EP 4 156 005 B1**
(45) Date of publication and mention of the grant of the patent: **01.10.2025**
(21) Application number: 22186365.7
(22) Date of filing: 22.07.2022
(51) Int. Cl.: G06F 21/60, G06F 21/72, G06F 21/80

(54) **SYSTEM, APPARATUS AND METHOD FOR DIRECT PERIPHERAL ACCESS OF SECURE STORAGE**
SYSTEM, GERÄT UND VERFAHREN FÜR DIREKTEN PERIPHEREN ZUGRIFF AUF EINEN SICHEREN SPEICHER
SYSTÈME, APPAREIL ET PROCÉDÉ POUR ACCÈS DIRECT PÉRIPHÉRIQUE DE STOCKAGE SÉCURISÉ

(30) Priority: 24.09.2021 US 202117483904
(43) Date of publication of application: 29.03.2023
(73) Proprietor: INTEL Corporation, Santa Clara, CA 95054 (US)
(72) Inventor: Dewan, Prashant, Portland OR, 97229 (US); Chhabra, Siddhartha, Portland OR, 97229 (US); Royer Jr, Robert, Portland OR, 97229 (US); Patel, Baiju, Portland OR, 97229 (US)
(74) Representative: Samson & Partner Patentanwälte mbB

(56) References cited:
- US-A1- 2016 364 343
- US-A1- 2019 342 093
- US-A1- 2021 200 880

## Description

### Background

In computing systems having host processors (e.g., a central processing unit (CPU)) and an accelerator, when the accelerator seeks to access storage, it requires the help of the CPU. More specifically, the CPU reads the storage content, brings it into memory, and then the accelerator reads the content from memory. This two-step process is repeated in the reverse direction on writes to the storage. Typically software running on the CPU will decide what data should be processed and load it into the memory before invoking the accelerator.

The extra overhead involving the CPU and the hop to memory adds latency to the read/write process. For large files like textures and models, this becomes a bigger challenge. While technologies are being proposed to enable direct storage between accelerator and storage, difficulties still exist. For example, when data stored in memory is encrypted, and/or compressed, the CPU decrypts and/or decompresses the data before the data is written to the memory, which still increases overhead, complexity and latency.

US 2016/364343 A1 relates to encrypting or decrypting (ciphering) data in memory to a system-on-a-chip (SoC) device. For example, a method of encrypting data on a memory device includes receiving a memory transaction request at an inline encryption engine coupled between a processing core and switch fabric in the SoC. The memory transaction request includes a context component and a data component. The context component is analyzed to determine whether the data component will be stored in an encrypted memory region. If the data component will be stored in an encrypted memory region, the data component is encrypted and communicated to a location in the encrypted memory region. The location is based at least on the context component.

US 2019/342093 A1 relates to a system architecture for the protected communication of content. For example, an apparatus comprises one or more processors that are to communicate with a computing engine of the computing system and to: receive an instruction including information on a cryptographic key; determine whether a no-decrypt mode is to be active or inactive with respect to a read request from the computing engine; when receiving the read request to read content from a memory, and in response to a determination that the no-decrypt mode is inactive, decrypt the content using the key to generate a decrypted content and send the decrypted content to the computing engine; and in response to receiving the read request, and in response to a determination that the no-decrypt mode is active, send the content to the computing engine without decrypting the content.

### Summary

The present invention is defined in the independent claims. The dependent claims define embodiments thereof.

### Brief Description Of The Drawings

FIG. 1 is a block diagram of a system in accordance with an embodiment.
FIG. 2 is a block diagram of a system in accordance with another embodiment.
FIG. 3 is a block diagram of an inline encryption engine in accordance with an embodiment.
FIG. 4A is flow diagram of a method in accordance with an embodiment.
FIG. 4B is flow diagram of a method in accordance with another embodiment.
FIG. 5 is flow diagram of a method in accordance with yet another embodiment.
FIGs 6A-6B are block diagrams illustrating a generic vector friendly instruction format and instruction templates thereof according to embodiments of the invention;
FIGs 7A-D are block diagrams illustrating an exemplary specific vector friendly instruction format according to embodiments of the invention;
FIG 8 is a block diagram of a register architecture according to one embodiment of the invention;
FIG 9A is a block diagram illustrating both an exemplary in-order pipeline and an exemplary register renaming, out-of-order issue/execution pipeline according to embodiments of the invention.
FIG 9B is a block diagram illustrating both an exemplary embodiment of an in-order architecture core and an exemplary register renaming, out-of-order issue/execution architecture core to be included in a processor according to embodiments of the invention;
FIGs 10A-B illustrate a block diagram of a more specific exemplary in-order core architecture, which core would be one of several logic blocks (including other cores of the same type and/or different types) in a chip;
FIG 11 is a block diagram of a processor that may have more than one core, may have an integrated memory controller, and may have integrated graphics according to embodiments of the invention;
FIGs 12, 13, 14, and 15 are block diagrams of exemplary computer architectures; and
FIG 16 is a block diagram contrasting the use of a software instruction converter to convert binary instructions in a source instruction set to binary instructions in a target instruction set according to embodiments of the invention.

### Detailed Description

In various embodiments, an inline cryptographic (and/or) compression circuit may be provided on a path between storage and accelerator. In this way, storage transactions (also referred to as memory transactions herein) may be performed in a manner to enable encryption/decryption (and/or compression/decompression) of data inline, without an intermediate hop to memory. This reduces latency of reads and writes, and further enhances security because no other agent in the path can access the decrypted data. Embodiments may enable a cryptographic and/or compression algorithm to be selected by software. As an example, software can use different compression algorithm for different blocks of storage (e.g., volumes) depending on the type of data that is stored on the drives.

In embodiments, user-level instruction set architecutre (ISA) instructions as included in software may be executed by a processor to configure policies, identities of the requester and one or more Key IDs that a requester is allowed to use. Such instructions may also configure the encryption and compression modes and algorithms that requesters can use. Finally the instructions may set up error handling to inform software when errors occur.

With embodiments, performance may increase since there are no memory copies involved and an accelerator can directly read a storage stack. In addition, embodiments may improve security since data in the storage is always encrypted and plaintext is readable only by an authorized requester.

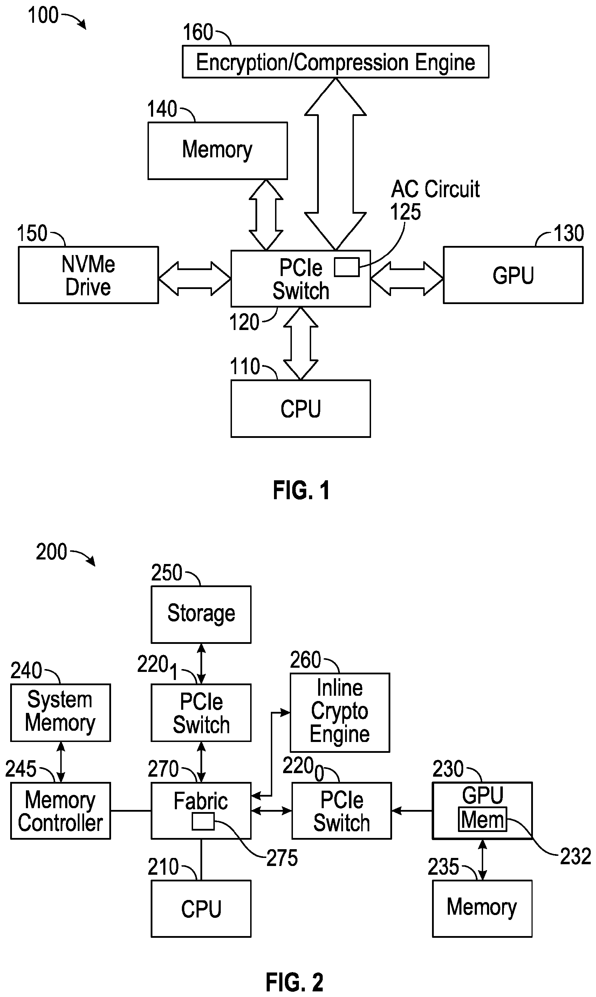

Referring now to FIG. 1, shown is a block diagram of a system in accordance with an embodiment. As shown in FIG. 1, system 100 is an exemplary representation of a computing system having multiple processors, storages, memories and so forth. In one example, system 100 may be a client computing system such as a laptop or desktop system. In other embodiments, system 100 may represent at least a portion of a distributed computing environment.

In any event, in the high level shown in FIG. 1, system 100 includes a central processing unit (CPU) 110 coupled to a switch 120 which, in the embodiment shown is implemented as a Peripheral Component Interconnect express (PCIe) switch 120. As further shown, PCIe switch 120 also includes an access control circuit 125. In embodiments herein, access control circuit 125 may be configured to perform access control operations to ensure that a consumer of data is authorized to access the data.

PCle switch 120 also couples CPU 110 to other components of system 100. Such components may include a graphics processing unit (GPU) 130, a memory 140 such as a system memory (e.g., implemented as dynamic random access memory (DRAM)), and a nonvolatile memory express (NVMe) drive 150. In the embodiment shown, CPU 110 and GPU 130 may be implemented as separate components (e.g., separate integrated circuits (ICs)). Embodiments are not limited in this regard and it is possible for CPU 110 and GPU 130 to be implemented in a single package such as a multi-die package. In yet other cases, these devices may be integrated on a single semiconductor die.

As further illustrated, an inline encryption/compression engine 160 (generically "inline engine" herein) further is present and is coupled to PCIe switch 120. Note that while shown at this location in the embodiment of FIG. 1, in other cases, engine 160 may be implemented within one or more of drive 150, switch 120 and/or GPU 130. Further as will be described herein in other cases, inline engine 160 may be implemented within fabric circuitry in a distributed architecture implementation. Also understand while in the embodiment of FIG. 1, details of an implementation in which data is processed by engine 160 may both be encrypted and compressed, in other cases data may be encrypted or compressed and a given inline engine may implement only one of these functionalities.

As further shown, PCIe switch 120 also includes an access control circuit 125. In embodiments herein, access control circuit 125 may be configured to perform access control operations to ensure that a consumer of data is authorized to access the data. Understand that while shown at this high level in the embodiment of FIG. 1, many variations and alternatives are possible.

Referring now to FIG. 2, shown is a block diagram of a system in accordance with another embodiment. In FIG. 2, system 200 is a distributed computing environment that implements inline encryption/compression according to embodiments. As shown, system 200 generally includes similar components as in FIG. 1 (and thus reference numerals generally refer to the same components, albeit of the "200" series in place of the "100" series of FIG. 1); however, they may be differently arranged and coupled together via additional interconnecting components. Accordingly, various components, including CPU, GPU, inline cryptographic engine , and PCIe switches are not further described.

As shown in FIG. 2, system 200 further includes a fabric 270 that includes access control circuitry 275. Fabric 270 may take various forms in different environments. For example, in a network architecture, fabric 270 may be implemented as a number of routers or other components of an interconnection topology. In a datacenter implementation, fabric 270 may be implemented with rack-mounted devices that operate to interconnect CPUs, GPUs, memory and storage. Note that while inline crypto engine 260 is shown separately from fabric 270, in some implementations, engine 260 may be implemented within a fabric. As additionally shown, GPU 230 includes memory 232 and further is coupled to a device memory 235. Note that in different implementations there may be only one of memories 232, 235 present.

In any event, with embodiments herein data stored in an encrypted and/or compressed manner within storage 250 may be decrypted and/or decompressed inline and directly provided to GPU 230 (and more specifically to one or more of memories 232, 235), without involvement of CPU 210 or intermediate storage in system memory 240. Stated another way, assuming that GPU 230 is authorized to access data stored in a given partition of storage 250 (e.g., a given storage volume), GPU 230 can directly access encrypted and/or compressed data within storage 250 without involvement of CPU 210 (other than an initial access control configuration to enable this direct GPU access). Understand while shown at this high level in the embodiment of FIG. 2, many variations and alternatives are possible.

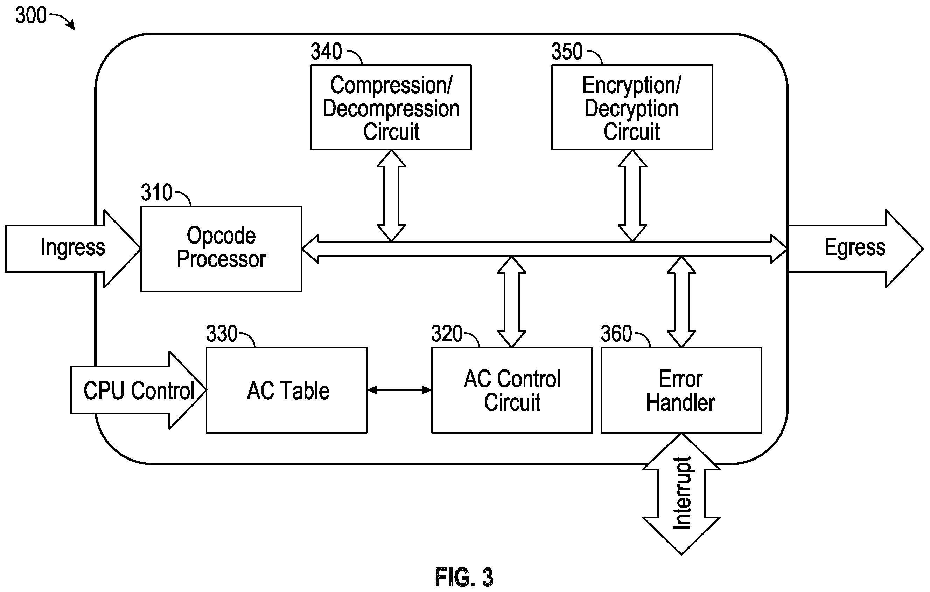

Referring now to FIG. 3, shown is a block diagram of an inline cryptographic/compression engine in accordance with an embodiment. As shown in FIG. 3, inline engine 300 may include various components to configure itself for cryptographic and compression operations, as well as to perform access control checks on incoming requests and, when authenticated, to perform appropriate encryption/decryption and/or compression/decompression operations for a requester. By way of inline engine 300, the overhead of involving a CPU or other host processor in performing these operations on behalf of a given requester such as an accelerator is avoided, along with corresponding hops to memory.

In operation, inline engine 300 takes in storage transactions with cipher text/plain text/compressed data/uncompressed data and processes the data as per a command code. In embodiments, the command code is embedded in the transaction itself and is part of the transaction header. The transaction header also includes a requester ID and Key ID used for the transaction.

As illustrated, inline engine 300 includes an opcode processor 310. Opcode processor 310 may receive and parse incoming requests to identify an opcode within the request and to provide a command code and requester and key IDs to an access control circuit 320. Based at least in part on the requester ID and the key ID, access control circuit 320 may determine whether the requester is authorized to take the requested action. To this end, access control circuit 320 may access an access control (AC) table 330, which may be stored in a memory of inline engine 300. In embodiments herein, AC table 330 may include a plurality of entries each to associate a requester ID with one or more key IDs that the requester is allowed to use. As shown, AC table 330 may be programmed under CPU control.

Assuming that a given requester is authorized based at least in part on the command code, access control circuit 320 may cause one or more of compression/decompression circuit 340 and encryption/decryption circuit 350 to perform operations on data associated with the request and provide the data as processed to a destination. For example, for read operations incoming encrypted/compressed data as received from a storage may be decrypted and decompressed and provided to the requester, e.g., a given accelerator. In turn, for write operations incoming unencrypted/uncompressed data as received from the accelerator may be encrypted and compressed and provided to a destination, e.g., a given volume of the storage.

As further illustrated, an error handler 360 is present. Access control circuit 320 may be configured to ensure that decrypted traffic is sent only to the right requester. When AC control circuit 320 determines that a given requester is not authenticated, e.g., due to a mismatch between requester ID and key ID, error handler 360 may raise an error, e.g., via communication of an interrupt to the CPU. Note that any violations based on a mismatch according to AC table 330 may be notified to software through an interrupt. Software can restart the transaction with different parameters, and/or inform the right requester for restarting the transaction.

In one embodiment, a first ISA instruction may be used to configure AC table 330. This instruction may have an opcode, a first field to identify a location having a requester ID and a second field to identify a location having at least one key ID. Although embodiments are not limited in this regard, these fields may identify registers that store these values (or registers that store locations in memory in which these values are stored). In one particular embodiment, the requester ID may be stored in a first architectural register (e.g., an RAX register) and the key ID may be stored in a second architectural register (e.g., an RDX register).

Referring now to Table 1, shown are parameters used by this accelerator configuration (ACC_CFG) instruction which may be used to configure AC table 310.

**Table 1**

| Field | Offset (bytes) | Size (bytes) | Comments |
|---|---|---|---|
| Device ID | 6 | 8 | Source ID |
| Allowed Key Ids | 8 | 14 | Keylds |

In an embodiment, a second ISA instruction may be used to map KeyIDs to keys for the encryption algorithm and compression algorithm. Referring now to Table 2, shown are parameters used by this key ID configuration (KEYID_CFG) instruction, which when executed may take the structure of Table 2 as an input from software to program a KeyID in the inline engine. This instruction may have an opcode, a first field to identify a location at which at least a portion the structure of Table 2 is stored, and optionally, and a second field to identify a location at which another portion of the structure is stored. In some cases, the second field can have an address of a structure that stores key attributes, e.g., algorithms, size, initialization vector, and so forth.

**Table 2**

| Field | Offset (bytes) | Size (bytes) | Comments |
|---|---|---|---|
| KEYID | 0 | 2 | Key Identifier |
| KEYID_CTRL | 2 | 5 | KeyID control: |
| | | | • Bits [7:0]: COMMAND |
| | | | • Bits [23:8]: ENC_ALG |
| | | | • Bits [39:24]: COMPRESSION_ALG |
| RSVD | 7 | 57 | Reserved; must be zero. |
| KEY_FIELD_1 | 64 | 64 | Software supplied KeyID data key or entropy for KeyID data key. |
| KEY_FIELD_2 | 128 | 64 | Software supplied KeyID tweak key or entropy for KeyID tweak key. |

The Command field of the Key ID control field of Table 2 may be used to control the encryption mode and compression algorithm for a KeyID. Table 3 provides a summary of the commands supported according to one embodiment.

**Table 3**

| Command | Encoding | Description |
|---|---|---|
| KEYID_SET_KEY_DIRE CT | 0 | Software uses this mode to directly program a key for use with KeylD. |
| KEYID_SET_KEY_RAN DOM | 1 | The CPU generates and assigns an ephemeral key for use with a KeyID. Each time the instruction is executed, the CPU generates a new key using a hardware random number generator and the keys are discarded on reset. |
| KEYID_CLEAR_KEY | 2 | Clear the (software programmed) key associated with the KeylD. On execution of this command, the KeyID gets TME behavior (encrypt with platform TME key or bypass TME encryption). |
| KEYID_NO_ENCRYPT | 3 | Do not encrypt memory when this KeyID is in use. |
| KEYID_SET_KEY_DIRE CT_COMPRESS | 4 | Software uses this mode to directly program a key for use with KeylD along with enabling compression |
| KEYID_SET _KEY_RAN DOM_COMPRESS | 1 | The CPU generates and assigns an ephemeral key for use with a KeyID. Each time the instruction is executed, the CPU generates a new key using a hardware random number generator and the keys are discarded on reset. |
| | | This command also instructs the inline engine to compress before encrypting data associated with a KeylD. |

The ENC_ALG and COMPRESSION_ALG fields of the Key ID control field of Table 2 are used to provide the encryption and compression algorithm associated with the KeyID. In an embodiment, software can discover supported encryption and compression algorithms using a capability model specific register (MSR), called a direct access storage inline encryption/compression capability (DAS_IEC_CAPABILITY MSR). This MSR enumerates the supported algorithms for software to use with KEYID_CFG instruction described above.

Referring now to Table 4, shown are the bit fields for this architectural MSR according to an embodiment.

**Table 4**

| Architectural MSR Name and Bit Fields | MSR/Bit Description | Comment |
|---|---|---|
| DAS_IEC_CAPABILITY MSR | Inline encryption/compression capability | |
| 0 | Support for AES-XTS 128-bit encryption algorithm. | NIST standard. |
| 1 | Support for AES-XTS 128b with integrity | |
| 2 | Support for AES-XTS 256-bit encryption algorithm. | NIST standard. |
| 3 | Support for AES-XTS 256 encryption algorithm with integrity | |
| 15:4 | Reserved | |
| 16 | Zero based compression | |
| 17 | Frequent pattern compression | |
| 31:18 | Reserved | |
| 35:32 | MK_TME_MAX_KEYID_BITS | 4 bits allow for a max value of 15, which can address 32K keys. |
| | Number of bits which can be allocated for usage as key identifiers for multi-key memory encryption. | |
| | Zero if MKTME is not supported. | |
| 50:36 | MK_TME_MAX_KEYS | KeyID 0 is specially reserved and is not accounted for in this field. |
| | Indicates the maximum number of keys which are available for usage. | |
| | This value may not be a power of 2. | Max value is 32K-1 keys. |
| | Zero if MKTME is not supported. | |
| 63:51 | Reserved | |

Understand while shown at this high level in the embodiment of FIG. 3, many variations and alternatives are possible.

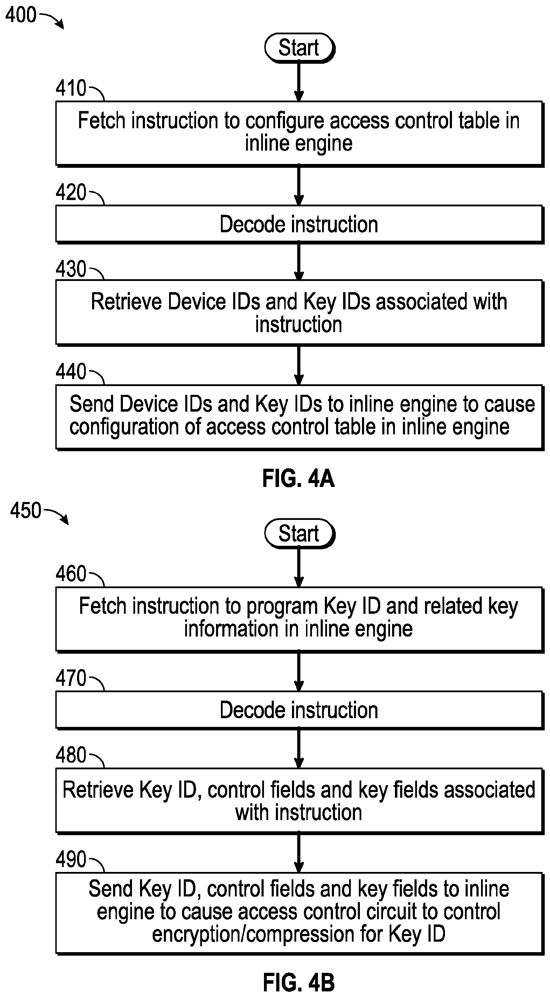

Referring now to FIG. 4A, shown is a flow diagram of a method in accordance with an embodiment. More specifically, method 400 of FIG. 4A is a method for configuring an access control table. Such operation may be performed in response to a configuration instruction in accordance with an embodiment, which may be executed by a CPU. As such, method 400 may be performed by hardware circuitry, e.g., of a CPU or other host processor alone, and/or in combination with firmware and/or software.

As illustrated, method 400 begins by fetching an instruction to configure an access control table present in an inline engine (block 410). More specifically, this instruction may be fetched by a fetch circuit of the processor. In an embodiment, this instruction, which may be an ACC_CFG instruction of an ISA as described above, to operate on device ID (also referred to as requester ID) and key ID parameters.

At block 420 the instruction may be decoded, e.g., in a decoder of the host processor. For example, an opcode of the instruction may be decoded. Next at block 430 at least one device ID and key IDs associated with the instruction may be retrieved. For example, these parameters may be obtained from a memory at a location indicated by one or more operands of the instruction. Finally, at block 440 the device ID(s) and key IDs may be sent to the inline engine.

Understand that in response to receipt of these parameters and in response to an opcode of the instruction, the inline engine may configure an access control table with an entry that includes a requester ID (for the device ID) and one or more key IDs associated therewith. As such, each entry indicates one or more key IDs that a given requester is allowed to use during storage transactions. Understand while shown at this high level in the embodiment of FIG. 4A, many variations and alternatives are possible.

Referring now to FIG. 4B, shown is a flow diagram of a method in accordance with another embodiment. More specifically, method 450 of FIG. 4B is a method for mapping key controls for a key ID. Such operation may be performed in response to a key ID configuration instruction in accordance with an embodiment, which may be executed by a CPU. As such, method 450 may be performed by hardware circuitry, e.g., of a CPU or other host processor alone, and/or in combination with firmware and/or software.

As illustrated, method 450 begins by fetching an instruction to configure key controls for a key ID (block 460). More specifically, this instruction may be fetched by a fetch circuit of the processor. In an embodiment, this instruction, which may be an KEYID_CFG instruction of an ISA as described above, to operate on a structure received from software to program a given key ID.

At block 470 the instruction may be decoded, e.g., in a decoder of the host processor. For example, an opcode of the instruction may be decoded. Next at block 480 key ID control fields and key fields associated with the instruction may be retrieved. For example, these parameters may be obtained from a memory at a location indicated by one or more operands of the instruction. Finally, at block 490 the this information may be sent to the inline engine.

Understand that in response to receipt of this structure and in response to an opcode of the instruction, the inline engine may configure an access control circuit to control encryption/compression operations for that key ID. Understand while shown at this high level in the embodiment of FIG. 4B, many variations and alternatives are possible.

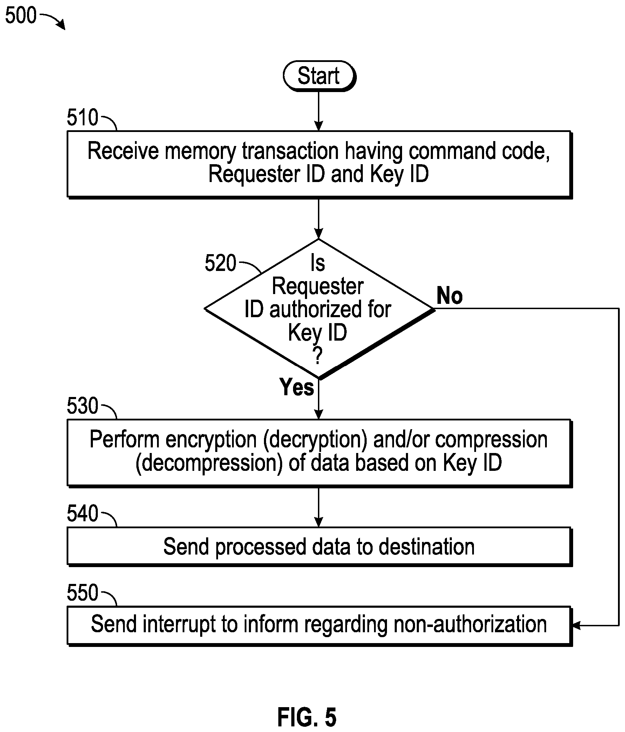

Referring now to FIG. 5, shown is a flow diagram of a method in accordance with yet another embodiment. More specifically, method 500 is a method for processing a storage transaction using an inline engine in accordance with an embodiment. As shown in FIG. 5, method 500 may be performed by hardware circuitry within the inline engine alone and/or in combination with firmware and/or software.

As illustrated, method 500 begins by receiving a storage transaction in the inline engine (block 510). More specifically, the inline engine may receive a storage transaction such as a read or write request from a requester such as a given accelerator. This storage transaction may include a command code, a requester ID and a key ID. For purposes of discussion herein, assume that this accelerator is a GPU and that the inline engine is present on a path between the GPU and a storage that is a source or destination of the storage transaction. Further note that all these components are separate and apart from a host processor such as a CPU.

Still with reference to FIG. 5, control next passes to diamond 520 to determine whether a requester associated with the requester ID is authorized for the key ID. This determination may be made by an access control circuit in communication with an AC table such as described above in FIG. 3. If it is determined that the requester is authorized for the key ID, control passes to block 530. At block 530 an encryption and/or compression operation may be performed on data based on the key **ID** (note of course that depending upon the type of storage transaction, instead a decryption/decompression operation may be performed).

Assuming that the storage transaction is a read request, at block 530, an inline decryption and/or decompression operation occurs, reducing overhead by avoiding the need to perform these operations via the host processor. At block 540 the processed data (here, unencrypted and decompressed) is sent to the destination which in this case is the requester itself, e.g., the GPU. For a write request note that at block 530, an encryption and/or compression operation may be performed and at block 540, this processed data may be sent to a storage as the destination.

Finally with regard to FIG. 5, if it is determined that the requester is not authorized for the key ID, control passes to block 550 where an interrupt may be sent to inform regarding this lack of authorization. As such, the host processor may receive the interrupt and seek to resolve the error. Understand while shown at this high level in the embodiment of FIG. 5, many variations and alternatives are possible.

Embodiments of the instruction(s) detailed above may be embodied in a "generic vector friendly instruction format" which is detailed below. **In** other embodiments, such a format is not utilized and another instruction format is used, however, the description below of the writemask registers, various data transformations (swizzle, broadcast, etc.), addressing, etc. is generally applicable to the description of the embodiments of the instruction(s) above. Additionally, exemplary systems, architectures, and pipelines are detailed below. Embodiments of the instruction(s) above may be executed on such systems, architectures, and pipelines, but are not limited to those detailed.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, September 2014; and see Intel^{®} Advanced Vector Extensions Programming Reference, October 2014).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

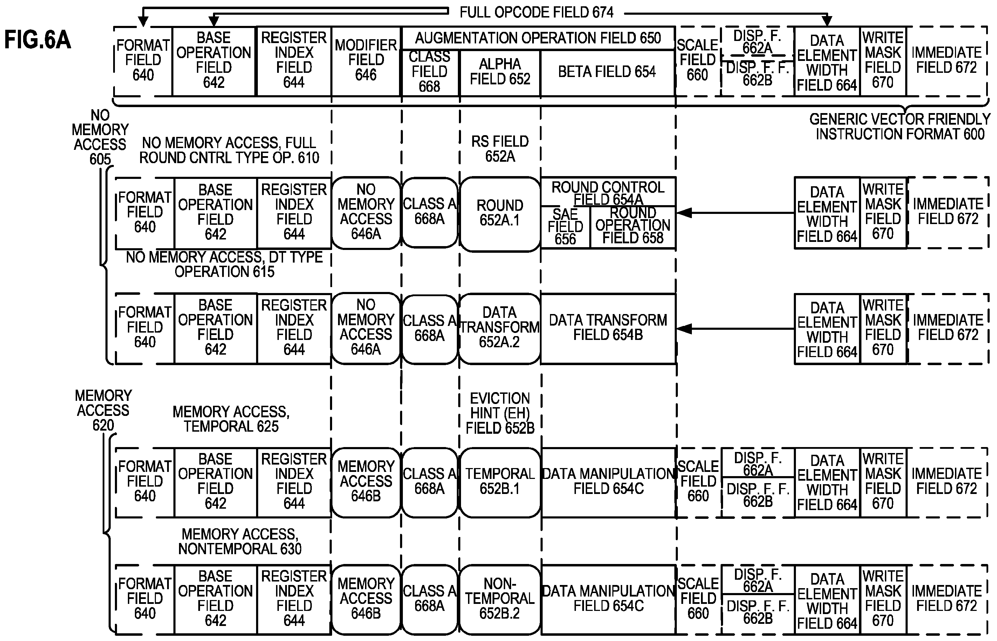

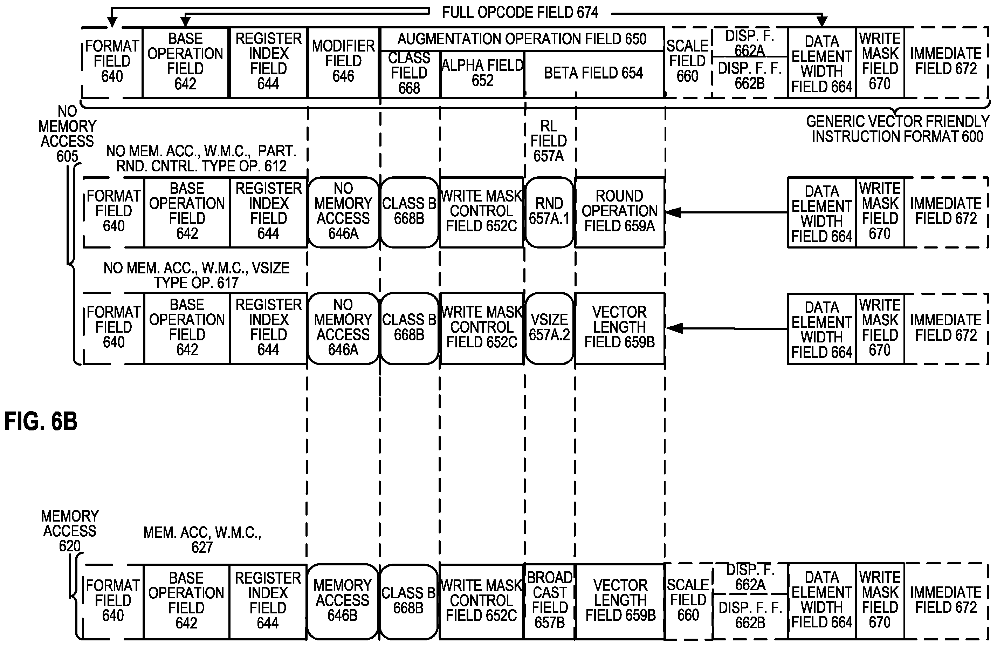

Figures 6A-6B are block diagrams illustrating a generic vector friendly instruction format and instruction templates thereof according to embodiments of the invention. Figure 6A is a block diagram illustrating a generic vector friendly instruction format and class A instruction templates thereof according to embodiments of the invention; while Figure 6B is a block diagram illustrating the generic vector friendly instruction format and class B instruction templates thereof according to embodiments of the invention. Specifically, a generic vector friendly instruction format 600 for which are defined class A and class B instruction templates, both of which include no memory access 605 instruction templates and memory access 620 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in Figure 6A include: 1) within the no memory access 605 instruction templates there is shown a no memory access, full round control type operation 610 instruction template and a no memory access, data transform type operation 615 instruction template; and 2) within the memory access 620 instruction templates there is shown a memory access, temporal 625 instruction template and a memory access, non-temporal 630 instruction template. The class B instruction templates in Figure 6B include: 1) within the no memory access 605 instruction templates there is shown a no memory access, write mask control, partial round control type operation 612 instruction template and a no memory access, write mask control, vsize type operation 617 instruction template; and 2) within the memory access 620 instruction templates there is shown a memory access, write mask control 627 instruction template.

The generic vector friendly instruction format 600 includes the following fields listed below in the order illustrated in Figures 6A-6B.

Format field 640 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 642 - its content distinguishes different base operations.

Register index field 644 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 646 - its content distinguishes occurrences of instructions in the generic vector instruction format that specify memory access from those that do not; that is, between no memory access 605 instruction templates and memory access 620 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 650 - its content distinguishes which one of a variety of different operations to be performed in addition to the base operation. This field is context specific. In one embodiment of the invention, this field is divided into a class field 668, an alpha field 652, and a beta field 654. The augmentation operation field 650 allows common groups of operations to be performed in a single instruction rather than 2, 3, or 4 instructions.

Scale field 660 - its content allows for the scaling of the index field's content for memory address generation (e.g., for address generation that uses 2^{scale} * index + base).

Displacement Field 662A- its content is used as part of memory address generation (e.g., for address generation that uses 2^{scale} * index + base + displacement).

Displacement Factor Field 662B (note that the juxtaposition of displacement field 662A directly over displacement factor field 662B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 674 (described later herein) and the data manipulation field 654C. The displacement field 662A and the displacement factor field 662B are optional in the sense that they are not used for the no memory access 605 instruction templates and/or different embodiments may implement only one or none of the two.

Data element width field 664 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 670 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 670 allows for partial vector operations, including loads, stores, arithmetic, logical, etc. While embodiments of the invention are described in which the write mask field's 670 content selects one of a number of write mask registers that contains the write mask to be used (and thus the write mask field's 670 content indirectly identifies that masking to be performed), alternative embodiments instead or additional allow the mask write field's 670 content to directly specify the masking to be performed.

Immediate field 672 - its content allows for the specification of an immediate. This field is optional in the sense that is it not present in an implementation of the generic vector friendly format that does not support immediate and it is not present in instructions that do not use an immediate.

Class field 668 - its content distinguishes between different classes of instructions. With reference to Figures 6A-B, the contents of this field select between class A and class B instructions. In Figures 6A-B, rounded corner squares are used to indicate a specific value is present in a field (e.g., class A 668A and class B 668B for the class field 668 respectively in Figures 6A-B).

### Instruction Templates of Class A

In the case of the non-memory access 605 instruction templates of class A, the alpha field 652 is interpreted as an RS field 652A, whose content distinguishes which one of the different augmentation operation types are to be performed (e.g., round 652A.1 and data transform 652A.2 are respectively specified for the no memory access, round type operation 610 and the no memory access, data transform type operation 615 instruction templates), while the beta field 654 distinguishes which of the operations of the specified type is to be performed. In the no memory access 605 instruction templates, the scale field 660, the displacement field 662A, and the displacement scale filed 662B are not present.

### No-Memory Access Instruction Templates - Full Round Control Type Operation

In the no memory access full round control type operation 610 instruction template, the beta field 654 is interpreted as a round control field 654A, whose content(s) provide static rounding. While in the described embodiments of the invention the round control field 654A includes a suppress all floating point exceptions (SAE) field 656 and a round operation control field 658, alternative embodiments may support may encode both these concepts into the same field or only have one or the other of these concepts/fields (e.g., may have only the round operation control field 658).

SAE field 656 - its content distinguishes whether or not to disable the exception event reporting; when the SAE field's 656 content indicates suppression is enabled, a given instruction does not report any kind of floating-point exception flag and does not raise any floating point exception handler.

Round operation control field 658 - its content distinguishes which one of a group of rounding operations to perform (e.g., Round-up, Round-down, Round-towards-zero and Round-to-nearest). Thus, the round operation control field 658 allows for the changing of the rounding mode on a per instruction basis. In one embodiment of the invention where a processor includes a control register for specifying rounding modes, the round operation control field's 650 content overrides that register value.

### No Memory Access Instruction Templates - Data Transform Type Operation

In the no memory access data transform type operation 615 instruction template, the beta field 654 is interpreted as a data transform field 654B, whose content distinguishes which one of a number of data transforms is to be performed (e.g., no data transform, swizzle, broadcast).

In the case of a memory access 620 instruction template of class A, the alpha field 652 is interpreted as an eviction hint field 652B, whose content distinguishes which one of the eviction hints is to be used (in Figure 6A, temporal 652B.1 and non-temporal 652B.2 are respectively specified for the memory access, temporal 625 instruction template and the memory access, non-temporal 630 instruction template), while the beta field 654 is interpreted as a data manipulation field 654C, whose content distinguishes which one of a number of data manipulation operations (also known as primitives) is to be performed (e.g., no manipulation; broadcast; up conversion of a source; and down conversion of a destination). The memory access 620 instruction templates include the scale field 660, and optionally the displacement field 662A or the displacement scale field 662B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 652 is interpreted as a write mask control (Z) field 652C, whose content distinguishes whether the write masking controlled by the write mask field 670 should be a merging or a zeroing.

In the case of the non-memory access 605 instruction templates of class B, part of the beta field 654 is interpreted as an RL field 657A, whose content distinguishes which one of the different augmentation operation types are to be performed (e.g., round 657A.1 and vector length (VSIZE) 657A.2 are respectively specified for the no memory access, write mask control, partial round control type operation 612 instruction template and the no memory access, write mask control, VSIZE type operation 617 instruction template), while the rest of the beta field 654 distinguishes which of the operations of the specified type is to be performed. In the no memory access 605 instruction templates, the scale field 660, the displacement field 662A, and the displacement scale filed 662B are not present.

In the no memory access, write mask control, partial round control type operation 610 instruction template, the rest of the beta field 654 is interpreted as a round operation field 659A and exception event reporting is disabled (a given instruction does not report any kind of floating-point exception flag and does not raise any floating point exception handler).

Round operation control field 659A - just as round operation control field 658, its content distinguishes which one of a group of rounding operations to perform (e.g., Round-up, Round-down, Round-towards-zero and Round-to-nearest). Thus, the round operation control field 659A allows for the changing of the rounding mode on a per instruction basis. In one embodiment of the invention where a processor includes a control register for specifying rounding modes, the round operation control field's 650 content overrides that register value.

In the no memory access, write mask control, VSIZE type operation 617 instruction template, the rest of the beta field 654 is interpreted as a vector length field 659B, whose content distinguishes which one of a number of data vector lengths is to be performed on (e.g., 128, 256, or 512 byte).

In the case of a memory access 620 instruction template of class B, part of the beta field 654 is interpreted as a broadcast field 657B, whose content distinguishes whether or not the broadcast type data manipulation operation is to be performed, while the rest of the beta field 654 is interpreted the vector length field 659B. The memory access 620 instruction templates include the scale field 660, and optionally the displacement field 662A or the displacement scale field 662B.

With regard to the generic vector friendly instruction format 600, a full opcode field 674 is shown including the format field 640, the base operation field 642, and the data element width field 664. While one embodiment is shown where the full opcode field 674 includes all of these fields, the full opcode field 674 includes less than all of these fields in embodiments that do not support all of them. The full opcode field 674 provides the operation code (opcode).

The augmentation operation field 650, the data element width field 664, and the write mask field 670 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

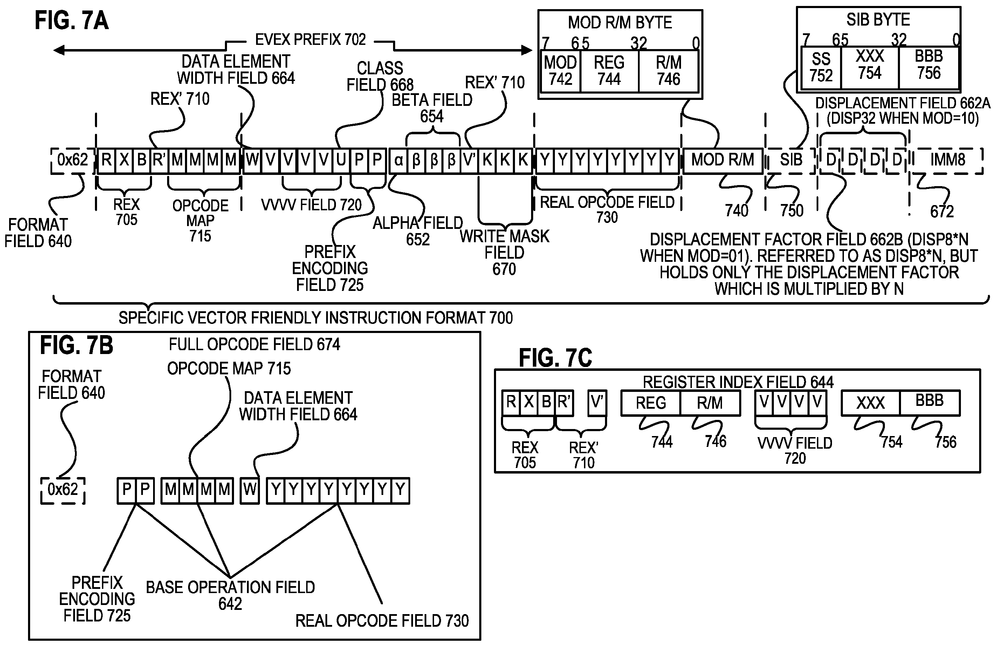

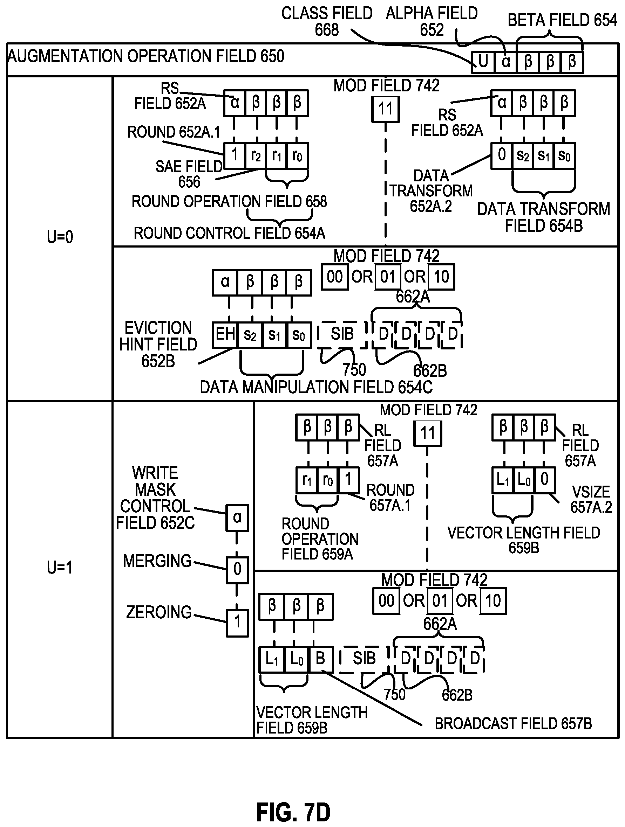

Figure 7 is a block diagram illustrating an exemplary specific vector friendly instruction format according to embodiments of the invention. Figure 7 shows a specific vector friendly instruction format 700 that is specific in the sense that it specifies the location, size, interpretation, and order of the fields, as well as values for some of those fields. The specific vector friendly instruction format 700 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from Figure 6 into which the fields from Figure 7 map are illustrated.

It should be understood that, although embodiments of the invention are described with reference to the specific vector friendly instruction format 700 in the context of the generic vector friendly instruction format 600 for illustrative purposes, the invention is not limited to the specific vector friendly instruction format 700 except where claimed. For example, the generic vector friendly instruction format 600 contemplates a variety of possible sizes for the various fields, while the specific vector friendly instruction format 700 is shown as having fields of specific sizes. By way of specific example, while the data element width field 664 is illustrated as a one bit field in the specific vector friendly instruction format 700, the invention is not so limited (that is, the generic vector friendly instruction format 600 contemplates other sizes of the data element width field 664).

The generic vector friendly instruction format 600 includes the following fields listed below in the order illustrated in Figure 7A.

EVEX Prefix (Bytes 0-3) 702 - is encoded in a four-byte form.

Format Field 640 (EVEX Byte 0, bits [7:0]) - the first byte (EVEX Byte 0) is the format field 640 and it contains 0x62 (the unique value used for distinguishing the vector friendly instruction format in one embodiment of the invention).

The second-fourth bytes (EVEX Bytes 1-3) include a number of bit fields providing specific capability.

REX field 705 (EVEX Byte 1, bits [7-5]) - consists of a EVEX.R bit field (EVEX Byte 1, bit [7] - R), EVEX.X bit field (EVEX byte 1, bit [6] - X), and 657BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 610 - this is the first part of the REX' field 610 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX. R, and the other RRR from other fields.

Opcode map field 715 (EVEX byte 1, bits [3:0] - mmmm) - its content encodes an implied leading opcode byte (0F, 0F 38, or 0F 3).

Data element width field 664 (EVEX byte 2, bit [7] - W) - is represented by the notation EVEX.W. EVEX.W is used to define the granularity (size) of the datatype (either 32-bit data elements or 64-bit data elements).

EVEX.vvvv 720 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 720 encodes the 4 low-order bits of the first source register specifier stored in inverted (1s complement) form. Depending on the instruction, an extra different EVEX bit field is used to extend the specifier size to 32 registers.

EVEX.U 668 Class field (EVEX byte 2, bit [2]-U) - If EVEX.U = 0, it indicates class A or EVEX.U0; if EVEX.U = 1, it indicates class B or EVEX.U1.

Prefix encoding field 725 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 652 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 654 (EVEX byte 3, bits [6:4]-SSS, also known as EVEX.s₂₋₀, EVEX.r₂₋₀, EVEX.rr1, EVEX.LL0, EVEX.LLB; also illustrated with βββ) - as previously described, this field is context specific.

REX' field 610 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 670 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 730 (Byte 4) is also known as the opcode byte. Part of the opcode is specified in this field.

MOD R/M Field 740 (Byte 5) includes MOD field 742, Reg field 744, and R/M field 746. As previously described, the MOD field's 742 content distinguishes between memory access and non-memory access operations. The role of Reg field 744 can be summarized to two situations: encoding either the destination register operand or a source register operand, or be treated as an opcode extension and not used to encode any instruction operand. The role of R/M field 746 may include the following: encoding the instruction operand that references a memory address, or encoding either the destination register operand or a source register operand.

Scale, Index, Base (SIB) Byte (Byte 6) - As previously described, the scale field's 650 content is used for memory address generation. SIB.xxx 754 and SIB.bbb 756 - the contents of these fields have been previously referred to with regard to the register indexes Xxxx and Bbbb.

Displacement field 662A (Bytes 7-10) - when MOD field 742 contains 10, bytes 7-10 are the displacement field 662A, and it works the same as the legacy 32-bit displacement (disp32) and works at byte granularity.

Displacement factor field 662B (Byte 7) - when MOD field 742 contains 01, byte 7 is the displacement factor field 662B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 662B is a reinterpretation of disp8; when using displacement factor field 662B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 662B substitutes the legacy x86 instruction set 8-bit displacement. Thus, the displacement factor field 662B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 672 operates as previously described.

### Full Opcode Field

Figure 7B is a block diagram illustrating the fields of the specific vector friendly instruction format 700 that make up the full opcode field 674 according to one embodiment of the invention. Specifically, the full opcode field 674 includes the format field 640, the base operation field 642, and the data element width (W) field 664. The base operation field 642 includes the prefix encoding field 725, the opcode map field 715, and the real opcode field 730.

### Register Index Field

Figure 7C is a block diagram illustrating the fields of the specific vector friendly instruction format 700 that make up the register index field 644 according to one embodiment of the invention. Specifically, the register index field 644 includes the REX field 705, the REX' field 710, the MODR/M.reg field 744, the MODR/M.r/m field 746, the VVVV field 720, xxx field 754, and the bbb field 756.

### Augmentation Operation Field

Figure 7D is a block diagram illustrating the fields of the specific vector friendly instruction format 700 that make up the augmentation operation field 650 according to one embodiment of the invention. When the class (U) field 668 contains 0, it signifies EVEX.U0 (class A 668A); when it contains 1, it signifies EVEX.U1 (class B 668B). When U=0 and the MOD field 742 contains 11 (signifying a no memory access operation), the alpha field 652 (EVEX byte 3, bit [7] - EH) is interpreted as the rs field 652A. When the rs field 652A contains a 1 (round 652A.1), the beta field 654 (EVEX byte 3, bits [6:4]- SSS) is interpreted as the round control field 654A. The round control field 654A includes a one bit SAE field 656 and a two bit round operation field 658. When the rs field 652A contains a 0 (data transform 652A.2), the beta field 654 (EVEX byte 3, bits [6:4]- SSS) is interpreted as a three bit data transform field 654B. When U=0 and the MOD field 742 contains 00, 01, or 10 (signifying a memory access operation), the alpha field 652 (EVEX byte 3, bit [7] - EH) is interpreted as the eviction hint (EH) field 652B and the beta field 654 (EVEX byte 3, bits [6:4]- SSS) is interpreted as a three bit data manipulation field 654C.

When U=1, the alpha field 652 (EVEX byte 3, bit [7] - EH) is interpreted as the write mask control (Z) field 652C. When U=1 and the MOD field 742 contains 11 (signifying a no memory access operation), part of the beta field 654 (EVEX byte 3, bit [4]- S₀) is interpreted as the RL field 657A; when it contains a 1 (round 657A.1) the rest of the beta field 654 (EVEX byte 3, bit [6-5]- S₂₋₁) is interpreted as the round operation field 659A, while when the RL field 657A contains a 0 (VSIZE 657.A2) the rest of the beta field 654 (EVEX byte 3, bit [6-5]- S₂₋₁) is interpreted as the vector length field 659B (EVEX byte 3, bit [6-5]- L₁₋₀). When U=1 and the MOD field 742 contains 00, 01, or 10 (signifying a memory access operation), the beta field 654 (EVEX byte 3, bits [6:4]- SSS) is interpreted as the vector length field 659B (EVEX byte 3, bit [6-5]- L₁₋₀) and the broadcast field 657B (EVEX byte 3, bit [4]- B).

### Exemplary Register Architecture

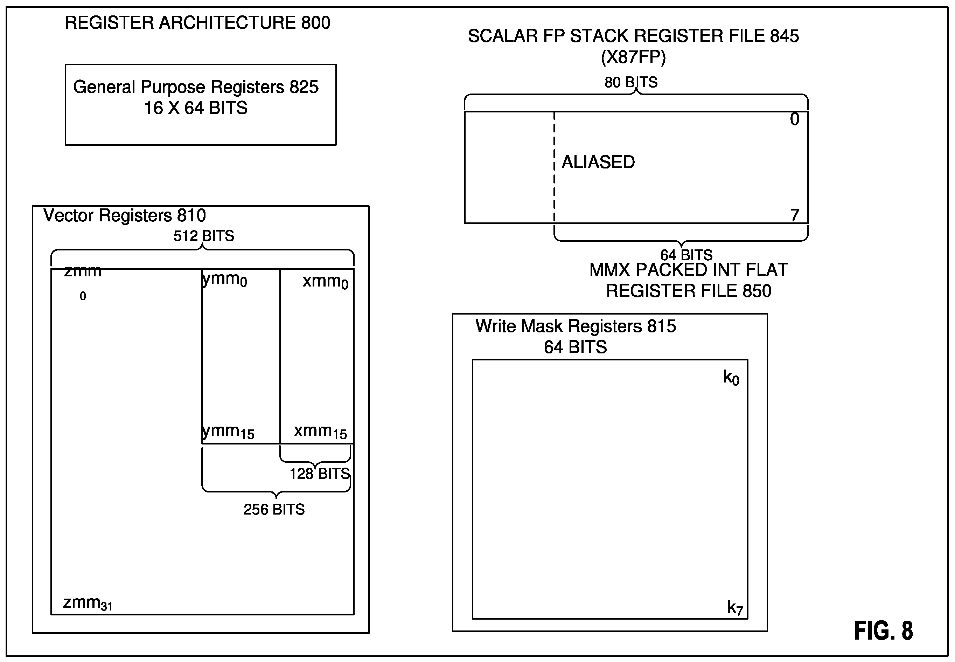

Figure 8 is a block diagram of a register architecture 800 according to one embodiment of the invention. In the embodiment illustrated, there are 32 vector registers 810 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 700 operates on these overlaid register file as illustrated in the below tables.

| Adjustable Vector Length | Class | Operations | Registers |
|---|---|---|---|
| Instruction Templates that do not include the vector length field 659B | A (Figure 6A; U=0) | 610, 615, 625, 630 | zmm registers (the vector length is 64 byte) |
| | B (Figure 6B; U=1) | 612 | zmm registers (the vector length is 64 byte) |
| Instruction templates that do include the vector length field 659B | B (Figure 6B; U=1) | 617, 627 | zmm, ymm, or xmm registers (the vector length is 64 byte, 32 byte, or 16 byte) depending on the vector length field 659B |

In other words, the vector length field 659B selects between a maximum length and one or more other shorter lengths, where each such shorter length is half the length of the preceding length; and instructions templates without the vector length field 659B operate on the maximum vector length. Further, in one embodiment, the class B instruction templates of the specific vector friendly instruction format 700 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 815 - in the embodiment illustrated, there are 8 write mask registers (k0 through k7), each 64 bits in size. In an alternate embodiment, the write mask registers 815 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 825 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 845, on which is aliased the MMX packed integer flat register file 850 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

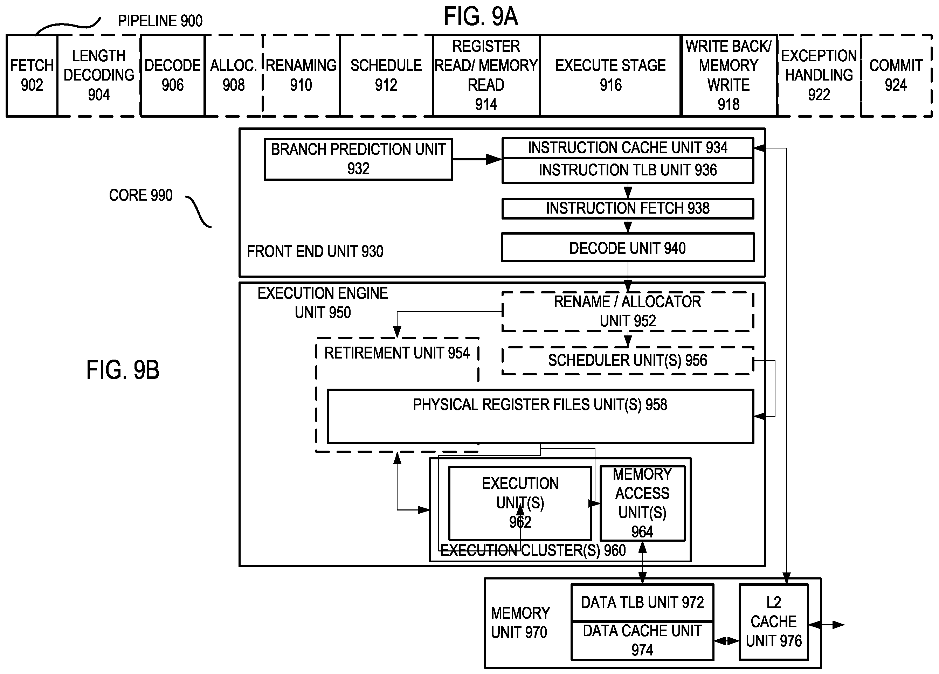

Figure 9A is a block diagram illustrating both an exemplary in-order pipeline and an exemplary register renaming, out-of-order issue/execution pipeline according to embodiments of the invention. Figure 9B is a block diagram illustrating both an exemplary embodiment of an in-order architecture core and an exemplary register renaming, out-of-order issue/execution architecture core to be included in a processor according to embodiments of the invention. The solid lined boxes in Figures 9A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 9A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

Figure 9B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

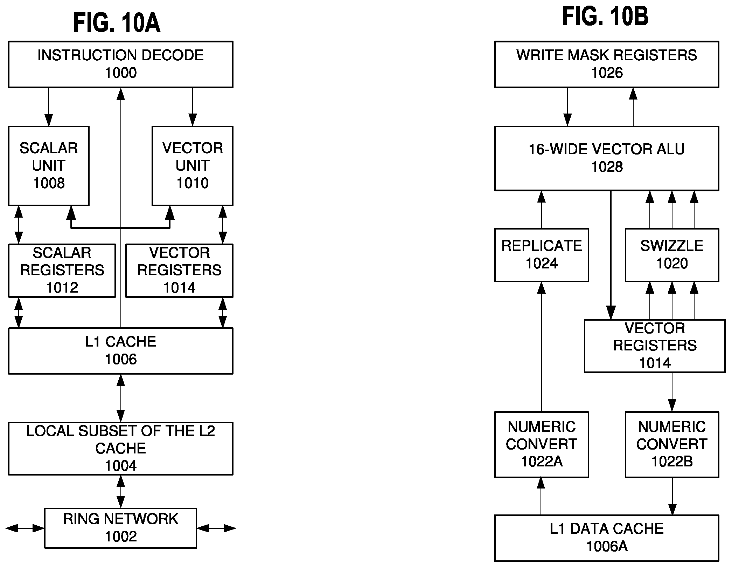

Figures 10A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 10A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 10B is an expanded view of part of the processor core in Figure 10A according to embodiments of the invention. Figure 10B includes an L1 data cache 1006A part of the L1 cache 1004, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

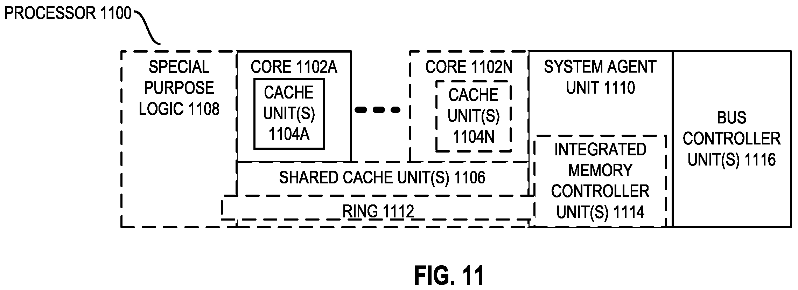

Figure 11 is a block diagram of a processor 1100 that may have more than one core, may have an integrated memory controller, and may have integrated graphics according to embodiments of the invention. The solid lined boxes in Figure 11 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multi-threading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

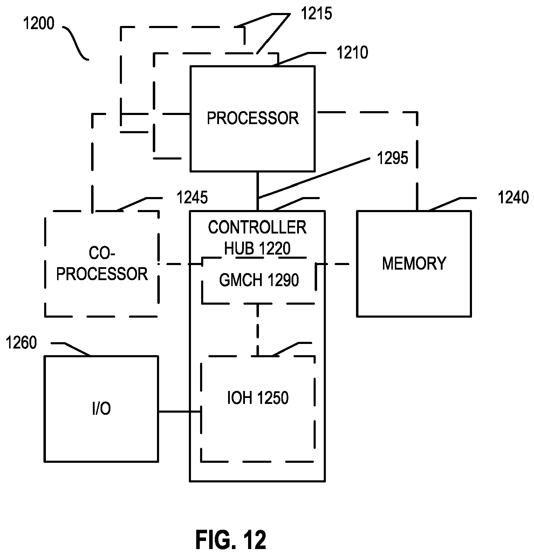

Figures 12-15 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to Figure 12, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 is couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in Figure 12 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

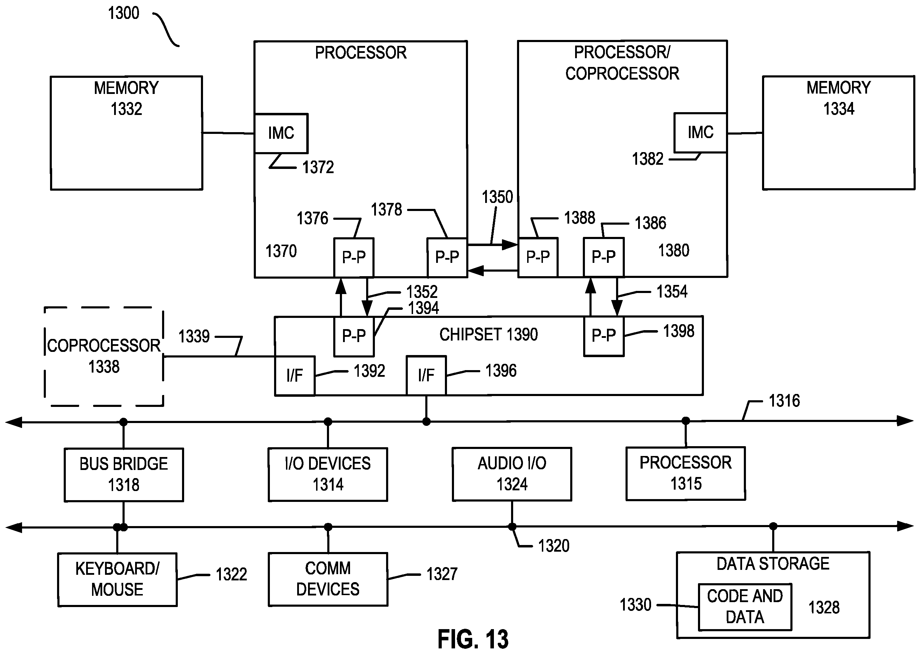

Referring now to Figure 13, shown is a block diagram of a first more specific exemplary system 1300 in accordance with an embodiment of the present invention. As shown in Figure 13, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in Figure 13, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in Figure 13, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 13, a system may implement a multi-drop bus or other such architecture.

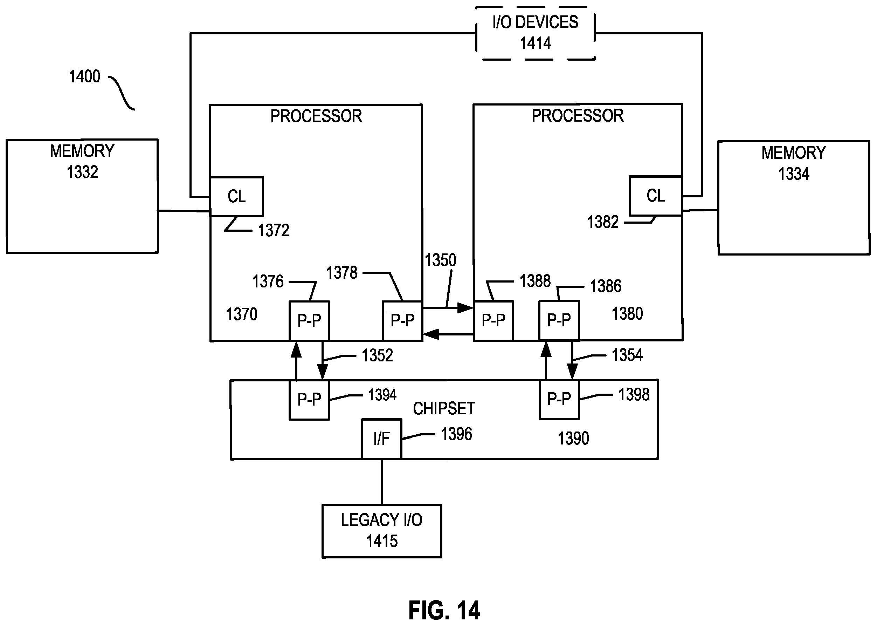

Referring now to Figure 14, shown is a block diagram of a second more specific exemplary system 1400 in accordance with an embodiment of the present invention. Like elements in Figures 13 and 14 bear like reference numerals, and certain aspects of Figure 13 have been omitted from Figure 14 in order to avoid obscuring other aspects of Figure 14.

Figure 14 illustrates that the processors 1370, 1380 may include integrated memory and I/O control logic ("CL") 1372 and 1382, respectively. Thus, the CL 1372, 1382 include integrated memory controller units and include I/O control logic. Figure 14 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

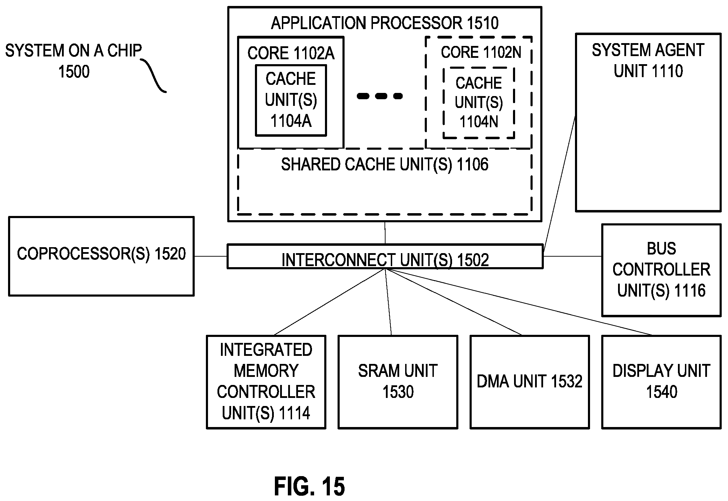

Referring now to Figure 15, shown is a block diagram of a SoC 1500 in accordance with an embodiment of the present invention. Similar elements in Figure 11 bear like reference numerals. Also, dashed lined boxes are optional features on more advanced SoCs. In Figure 15, an interconnect unit(s) 1502 is coupled to: an application processor 1510 which includes a set of one or more cores 202A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in Figure 13, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

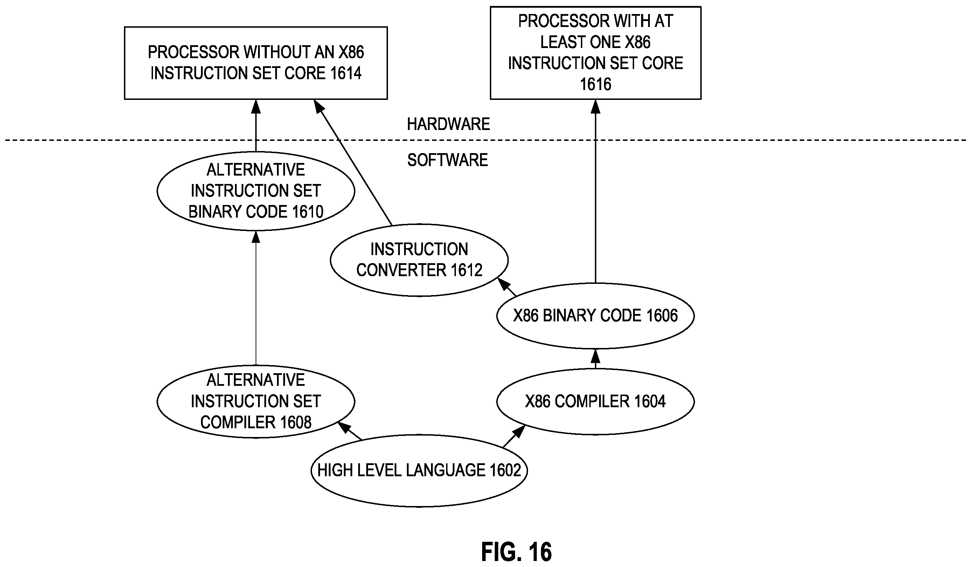

Figure 16 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 16 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, Figure 16 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. A system (100, 200) comprising:
a central processing unit, CPU, (110, 210);
a system memory (140, 240);
a storage drive (150, 250) to store encrypted data;
an accelerator (130, 230); and
an inline engine (160, 260, 300) coupled between the storage drive (150, 250) and the accelerator (130, 230), the inline engine (160, 260, 300) to provide decrypted data to the accelerator (130, 230),
wherein the inline engine (160, 260, 300) comprises:
an access control circuit (320) to receive a storage transaction directed to the storage drive (150, 250), the storage transaction having a requester ID and a key ID, the access control circuit (320) to determine whether to perform cryptography for the storage transaction based at least in part on the requester ID and the key ID;
a first memory to store an access control table (330), the access control table (330) having a plurality of entries each to store a requester ID and at least one key ID; and
an encryption/decryption circuit (350) coupled to the access control circuit (320), the encryption/decryption circuit (350) to perform a cryptographic operation on data associated with the storage transaction based at least in part on the key ID,
wherein the accelerator (130, 230) is to send the storage transaction to request data from the storage drive, and in response to the storage transaction, the inline engine (160, 260, 300) is to decrypt the data according to a decryption algorithm identified using the key ID and direct the decrypted data to the accelerator (160, 260, 300), without involvement of the CPU (110, 210) and without involvement of the system memory (140, 240).

2. The system (100, 200) of claim 1, further comprising a fabric (270), the fabric (270) comprising the inline engine (160, 260, 300), the fabric (270) to couple the CPU (110, 210), the storage drive (150, 250) and the accelerator (130, 230).

3. The system (100, 200) of claim 2, wherein the access control circuit (320), in response to a first command from the CPU (110, 210) responsive to a first instruction to cause the access control circuit (320) to configure the access control table, is to store a first entry having a first requester ID and at least one first key ID.

4. The system (100, 200) of claim 3, wherein the inline engine (160, 260, 300) comprises a processor (310) to process a command of the storage transaction and send the requester ID and the key ID to the access control circuit (320).

5. The system (100, 200) of claim 2, wherein the access control circuit (320), in response to a second command from the CPU (110, 210), is to configure the encryption/decryption circuit (350) to perform a first cryptographic mode according to a first key associated with a first key ID, wherein the first key ID is associated with the accelerator (130, 230).

6. The system (100, 200) of claim 5, wherein, according to the second command having a first command encoding, the inline engine (160, 260, 300) is to receive and store the first key, the first key generated by an application executed on the CPU (110, 210).

7. The system (100, 200) of claim 6, wherein, according to another instantiation of the second command having a second command encoding, the inline engine (160, 260, 300) is to clear the first key and associate a default memory encryption behavior with the first key ID.

8. The system (100, 200) of claim 5, wherein, according to the second command having a third command encoding, the inline engine (160, 260, 300) is to receive and store the first key, the first key an ephemeral key generated by the CPU (110, 210).

9. The system (100, 200) of any one of claims 1-8, further comprising a compression/decompression circuit (340) coupled to the access control circuit (320), the compression/decompression circuit (340) to perform compression/decompression operations on the data associated with the storage transaction based at least in part on the key ID.

10. A method (500) comprising:
receiving, in an access control circuit of an inline engine coupled between a storage drive to store encrypted data and an accelerator, a storage transaction directed to the storage drive from the accelerator (510), the storage transaction having a requester ID to identify the accelerator and a key ID;
determining, by the access control circuit, whether to perform cryptography for the storage transaction based at least in part on the requester ID and the key ID;
performing, by an encryption/decryption circuit of the inline engine, a cryptographic operation on data associated with the storage transaction based at least in part on the key ID (530); and
sending, by the inline engine, the processed data to the accelerator according to the storage transaction (540),
wherein the method further comprises: sending, by the accelerator, the storage transaction to request data from the storage drive, in response to the storage transaction, decrypting, by the inline engine, the data according to a decryption algorithm identified using the key ID, and directing, by the inline engine, the decrypted data to the accelerator, without involvement of a central processing unit, CPU, and without involvement of a system memory.

11. The method (500) of claim 10, further comprising determining whether the requester ID is authorized for the key ID (520), and performing the cryptographic operation (530) in response thereto, and if the requester ID is not authorized for the key ID, not performing the cryptographic operation and sending an interrupt to a host processor (550).

12. The method (500) of claim 10, further comprising:
decoding a first instruction, the first instruction having a first opcode, a first field to identify a location having the requester ID and a second field to identify a location having the key ID, wherein in response to the first instruction, storing, in a first entry of an access control table, the requester ID and the key ID; and
decoding a second instruction, the second instruction having a second opcode and a first field to identify a location having a programming structure, wherein in response to the second instruction, configuring the encryption/decryption circuit of the inline engine to perform the cryptographic operation according to a key included in the programming structure.

## Patentansprüche

1. System (100; 200), umfassend:
eine zentrale Verarbeitungseinheit, CPU, (110, 210);
einen Systemarbeitsspeicher (140; 240);
ein Datenspeicherlaufwerk (150, 250) zum Speichern von verschlüsselten Daten;
einen Beschleuniger (130; 230); und
eine Inline-Engine (160, 260, 300), die zwischen das Datenspeicherlaufwerk (150, 250) und den Beschleuniger (130, 230) gekoppelt ist, wobei die Inline-Engine (160, 260, 300) geeignet ist zum Bereitstellen von entschlüsselten Daten für den Beschleuniger (130, 230),
wobei die Inline-Engine (160, 260, 300) umfasst:
eine Zugriffssteuerschaltung (320) zum Empfangen einer Datenspeichertransaktion, die an das Datenspeicherlaufwerk (150, 250) weitergeleitet wird,
wobei die Datenspeichertransaktion eine Anforderer-ID und eine Schlüssel-ID aufweist, wobei die Zugriffssteuerschaltung (320) geeignet ist zum Ermitteln, ob eine Kryptographie für die Datenspeichertransaktion mindestens teilweise basierend auf der Anforderer-ID und der Schlüssel-ID durchgeführt werden muss;
einen ersten Arbeitsspeicher zum Speichern einer Zugriffsteuertabelle (330), wobei die Zugriffsteuertabelle (330) eine Vielzahl von Einträgen aufweist, die alle geeignet sind zum Speichern einer Anforderer-ID und mindestens einer Schlüssel-ID; und eine Verschlüsselungs-/Entschlüsselungsschaltung (350), die mit der Zugriffssteuerschaltung (320) gekoppelt ist, wobei die Verschlüsselungs-/Entschlüsselungsschaltung (350) geeignet ist zum Durchführen einer kryptographischen Operation an Daten, die mindestens teilweise basierend auf der Schlüssel-ID mit der Datenspeichertransaktion assoziiert sind,
wobei der Beschleuniger (130, 230) geeignet ist zum Senden der Datenspeichertransaktion, um Daten von dem Datenspeicherlaufwerk anzufordern, und wobei die Inline-Engine (160, 260, 300), als Reaktion auf die Datenspeichertransaktion, geeignet ist zum Entschlüsseln der Daten gemäß einem Entschlüsselungsalgorithmus, der unter Verwendung der Schlüssel-ID identifiziert wird, und zum Weiterleiten der entschlüsselten Daten zu dem Beschleuniger (160, 260, 300) ohne die CPU (110, 210) einzubeziehen und ohne den Systemarbeitsspeicher (140, 240) einzubeziehen.

2. System (100, 200) nach Anspruch 1, das ferner eine Fabric (270) umfasst, wobei die Fabric (270) die Inline-Engine (160, 260, 300) umfasst, wobei die Fabric (270) geeignet ist, um die CPU (110, 210), das Datenspeicherlaufwerk (150, 250) und den Beschleuniger (130, 230) miteinander zu koppeln.

3. System (100, 200) nach Anspruch 2, wobei die Zugriffssteuerschaltung (320), als Reaktion auf einen ersten Befehl von der CPU (110, 210), der auf eine erste Anweisung antwortet, welche die Zugriffssteuerschaltung (320) veranlasst, die Zugriffssteuertabelle zu konfigurieren, geeignet ist zum Speichern eines ersten Eintrags, der eine erste Anforderer-ID und mindestens eine erste Schlüssel-ID aufweist.

4. System (100, 200) nach Anspruch 3, wobei die Inline-Engine (160, 260, 300) einen Prozessor (310) umfasst, um einen Befehl der Datenspeichertransaktion zu verarbeiten und um die Anforderer-ID und die Schlüssel-ID zu der Zugriffssteuerschaltung (320) zu senden.

5. System (100, 200) nach Anspruch 2, wobei die Zugriffssteuerschaltung (320), als Reaktion auf einen zweiten Befehl von der CPU (110, 210), geeignet ist zum Konfigurieren der Verschlüsselungs-/Entschlüsselungsschaltung (350), um einen ersten kryptographischen Modus gemäß einem ersten Schlüssel durchzuführen, der mit einer ersten Schlüssel-ID assoziiert ist, wobei die erste Schlüssel-ID mit dem Beschleuniger (130, 230) assoziiert ist.

6. System (100, 200) nach Anspruch 5, wobei die Inline-Engine (160, 260, 300), gemäß dem zweiten Befehl, der eine Codierung des ersten Befehls aufweist, geeignet ist zum Empfangen und Speichern des ersten Schlüssels, wobei der erste Schlüssel von einer Anwendung erzeugt wird, die in der CPU (110, 210) ausgeführt wird.

7. System (100, 200) nach Anspruch 6, wobei die Inline-Engine (160, 260, 300), gemäß einer anderen Instanziierung des zweiten Befehls, die eine Codierung des zweiten Befehls aufweist, geeignet ist zum Löschen des ersten Schlüssels und zum Assoziieren eines standardmäßigen Verhaltens einer Arbeitsspeicherverschlüsselung mit der ersten Schlüssel-ID.

8. System (100, 200) nach Anspruch 5, wobei die Inline-Engine (160, 260, 300), gemäß dem zweiten Befehl, der eine Codierung eines dritten Befehls aufweist, geeignet ist zum Empfangen und Speichern des ersten Schlüssels, wobei der erste Schlüssel ein Kurzzeitschlüssel ist, der von der CPU (110, 210) erzeugt wird.

9. System (100, 200) nach einem der Ansprüche 1 bis 8, das ferner eine Komprimierungs-/Dekomprimierungsschaltung (340) umfasst, die mit der Zugriffssteuerschaltung (320) gekoppelt ist, wobei die Komprimierungs-/Dekomprimierungsschaltung (340) geeignet ist zum Durchführen von Komprimierungs/Dekomprimierungsoperationen an den Daten, die mindestens teilweise basierend auf der Schlüssel-ID mit der Datenspeichertransaktion assoziiert sind.

10. Verfahren (500), umfassend:
Empfangen, in einer Zugriffssteuerschaltung einer Inline-Engine, die zwischen ein Datenspeicherlaufwerk zum Speichern von verschlüsselten Daten und einen Beschleuniger gekoppelt ist, einer Datenspeichertransaktion, die von dem Beschleuniger zu dem Datenspeicherlaufwerk weitergeleitet wird (510), wobei die Datenspeichertransaktion eine Anforderer-ID zum Identifizieren des Beschleunigers und eine Schlüssel-ID aufweist;
Ermitteln, durch die Zugriffssteuerschaltung, ob eine Kryptographie für die Datenspeichertransaktion mindestens teilweise basierend auf der Anforderer-ID und der Schlüssel-ID durchgeführt werden muss;
Durchführen, durch eine Verschlüsselungs-/Entschlüsselungsschaltung der Inline-Engine, einer kryptographischen Operation an Daten, die mindestens teilweise basierend auf der Schlüssel-ID mit der Datenspeichertransaktion assoziiert sind (530); und
Senden der verarbeiteten Daten von der Inline-Engine gemäß der Datenspeichertransaktion zu dem Beschleuniger (540),
wobei das Verfahren ferner umfasst: Senden, durch den Beschleuniger, der Datenspeichertransaktion, um Daten von dem Datenspeicherlaufwerk anzufordern; als Reaktion auf die Datenspeichertransaktion, Entschlüsseln, durch die Inline-Engine, der Daten gemäß einem Entschlüsselungsalgorithmus, der unter Verwendung einer Schlüssel-ID identifiziert wird; und Weiterleiten der entschlüsselten Daten von der Inline-Engine zu dem Beschleuniger ohne eine zentrale Verarbeitungseinheit, CPU, einzubeziehen und ohne einen Systemarbeitsspeicher einzubeziehen.

11. Verfahren (500) nach Anspruch 10, das ferner umfasst: Ermitteln, ob die Anforderer-ID für die Schlüssel-ID (520) autorisiert ist; und, als Reaktion darauf, Durchführen der kryptographischen Operation (530), und wenn die Anforderer-ID nicht für die Schlüssel-ID autorisiert ist, Nicht-Durchführen der kryptographischen Operation und Senden einer Programmunterbrechung zu einem Host-Prozessor (550).

12. Verfahren (500) nach Anspruch 10, das ferner umfasst:
Decodieren einer ersten Anweisung, wobei die erste Anweisung einen ersten Opcode, ein erstes Feld zum Identifizieren eines Standorts, der die Anforderer-ID aufweist, und ein zweites Feld zum Identifizieren eines Standorts aufweist, der die Anforderer-ID aufweist; und
als Reaktion auf die erste Anweisung, Speichern der Anforderer-ID und der Schlüssel-ID in einem ersten Eintrag einer Zugriffssteuertabelle; und
Decodieren einer zweiten Anweisung, wobei die zweite Anweisung einen zweiten Opcode, ein erstes Feld zum Identifizieren eines Standorts aufweist, der eine Programmierstruktur aufweist; und, als Reaktion auf die zweite Anweisung, Konfigurieren der Verschlüsselungs-/Entschlüsselungsschaltung der Inline-Engine, um die kryptographische Operation gemäß einem Schlüssel durchzuführen, der in der Programmierstruktur enthalten ist.

## Revendications

1. Système (100, 200) comprenant :
une unité centrale de traitement, CPU, (110, 210) ;
une mémoire système (140, 240) ;
une unité de stockage (150, 250) pour stocker des données chiffrées ;
un accélérateur (130, 230) ; et
un moteur en ligne (160, 260, 300) couplé entre l'unité de stockage (150, 250) et l'accélérateur (130, 230), le moteur en ligne (160, 260, 300) fournissant des données décryptées à l'accélérateur (130, 230),
où le moteur en ligne (160, 260, 300) comprend :
un circuit de contrôle d'accès (320) destiné à recevoir une transaction de stockage dirigée vers l'unité de stockage (150, 250), la transaction de stockage ayant un ID de demandeur et un ID de clé, le circuit de contrôle d'accès (320) permettant de déterminer s'il convient d'effectuer une cryptographie pour la transaction de stockage sur la base, au moins en partie, de l'ID de demandeur et de l'ID de clé ;
une première mémoire destinée à stocker une table de contrôle d'accès (330), la table de contrôle d'accès (330) comportant une pluralité d'entrées destinées chacune à stocker un ID de demandeur et au moins un ID de clé ; et
un circuit de chiffrement/déchiffrement (350) couplé au circuit de contrôle d'accès (320), le circuit de chiffrement/déchiffrement (350) effectuant une opération cryptographique sur des données associées à la transaction de stockage sur la base, au moins en partie, de l'ID de clé,
où l'accélérateur (130, 230) doit envoyer la transaction de stockage pour demander des données à l'unité de stockage et, en réponse à la transaction de stockage, le moteur en ligne (160, 260, 300) doit décrypter les données selon un algorithme de décryptage identifié à l'aide de l'ID de clé et diriger les données décryptées vers l'accélérateur (160, 260, 300), sans intervention de la CPU (110, 210) et sans intervention de la mémoire système (140, 240).

2. Système (100, 200) selon la revendication 1, comprenant en outre une matrice (270), la matrice (270) comprenant le moteur en ligne (160, 260, 300), la matrice (270) permettant de coupler la CPU (110, 210), l'unité de stockage (150, 250) et l'accélérateur (130, 230).

3. Système (100, 200) selon la revendication 2, dans lequel le circuit de contrôle d'accès (320), en réponse à une première commande provenant de la CPU (110, 210), en réponse à une première instruction pour amener le circuit de contrôle d'accès (320) à configurer la table de contrôle d'accès, est destiné à stocker une première entrée ayant un premier ID de demandeur et au moins un premier ID de clé.

4. Système (100, 200) selon la revendication 3, dans lequel le moteur en ligne (160, 260, 300) comprend un processeur (310) pour traiter une commande de la transaction de stockage et envoyer l'ID de demandeur et l'ID de clé au circuit de contrôle d'accès (320).

5. Système (100, 200) selon la revendication 2, dans lequel le circuit de contrôle d'accès (320), en réponse à une deuxième commande provenant de la CPU (110, 210), est destiné à configurer le circuit de chiffrement/déchiffrement (350) pour exécuter un premier mode cryptographique selon une première clé associée à un premier ID de clé, où le premier ID de clé est associé à l'accélérateur (130, 230).

6. Système (100, 200) selon la revendication 5, dans lequel, conformément à la deuxième commande ayant un premier codage de commande, le moteur en ligne (160, 260, 300) est destiné à recevoir et stocker la première clé, la première clé étant générée par une application exécutée sur la CPU (110, 210).

7. Système (100, 200) selon la revendication 6, dans lequel, selon une autre instanciation de la deuxième commande ayant un deuxième codage de commande, le moteur en ligne (160, 260, 300) est destiné à effacer la première clé et à associer un comportement de chiffrement de mémoire par défaut au premier ID de clé.

8. Système (100, 200) selon la revendication 5, dans lequel, conformément à la deuxième commande ayant un troisième codage de commande, le moteur en ligne (160, 260, 300) est destiné à recevoir et à stocker la première clé, la première clé étant une clé éphémère générée par la CPU (110, 210).

9. Système (100, 200) selon l'une quelconque des revendications 1 à 8, comprenant en outre un circuit de compression/décompression (340) couplé au circuit de commande d'accès (320), le circuit de compression/décompression (340) étant destiné à effectuer des opérations de compression/décompression sur les données associées à la transaction de stockage sur la base, au moins en partie, de l'ID de clé.

10. Procédé (500) comprenant les étapes suivantes :
recevoir, dans un circuit de commande d'accès d'un moteur en ligne couplé entre un unité de stockage pour stocker des données chiffrées et un accélérateur, une transaction de stockage dirigée vers l'unité de stockage depuis l'accélérateur (510), la transaction de stockage ayant un ID de demandeur pour identifier l'accélérateur et un ID de clé ;
déterminer, par le circuit de contrôle d'accès, s'il convient d'effectuer une cryptographie pour la transaction de stockage sur la base, au moins en partie, de l'ID de demandeur et de l'ID de clé ;
effectuer, par un circuit de chiffrement/déchiffrement du moteur en ligne, une opération cryptographique sur des données associées à la transaction de stockage sur la base, au moins en partie, de l'ID de clé (530) ; et
envoyer, par le moteur en ligne, les données traitées à l'accélérateur en fonction de la transaction de stockage (540),
où le procédé comprend en outre les étapes suivantes : envoyer, par l'accélérateur, la transaction de stockage pour demander des données à l'unité de stockage, en réponse à la transaction de stockage, déchiffrer, par le moteur en ligne, les données selon un algorithme de déchiffrement identifié au moyen de l'ID de clé, et diriger, par le moteur en ligne, les données déchiffrées vers l'accélérateur, sans intervention d'une unité centrale de traitement, CPU, et sans intervention d'une mémoire système.

11. Procédé (500) selon la revendication 10, comprenant en outre les étapes suivantes : déterminer si l'ID de demandeur est autorisé pour l'ID de clé (520), et exécuter l'opération cryptographique (530) en réponse à cela et, si l'ID de demandeur n'est pas autorisé pour l'ID de clé, ne pas exécuter l'opération cryptographique et envoyer une interruption à un processeur hôte (550).

12. Procédé (500) selon la revendication 10, comprenant en outre les étapes suivantes :
décoder une première instruction, la première instruction ayant un premier code opération, un premier champ permettant d'identifier un emplacement ayant l'ID de demandeur et un deuxième champ permettant d'identifier un emplacement ayant l'ID de clé où, en réponse à la première instruction, le procédé comprend de stocker, dans une première entrée d'une table de contrôle d'accès, l'ID de demandeur et l'ID de clé ; et
décoder une deuxième instruction, la deuxième instruction ayant un deuxième code opération et un premier champ pour identifier un emplacement ayant une structure de programmation où, en réponse à la deuxième instruction, le procédé comprend de configurer le circuit de chiffrement/déchiffrement du moteur en ligne pour effectuer l'opération cryptographique conformément à une clé incluse dans la structure de programmation.
